(19) **Europäisches Patentamt / European Patent Office / Office européen des brevets**

(11) **EP 1 794 221 B1**

(12) **EUROPEAN PATENT SPECIFICATION**

(45) Date of publication and mention of the grant of the patent:
**03.02.2016 Bulletin 2016/05**

(21) Application number: **05783706.4**

(22) Date of filing: **09.09.2005**

(51) Int Cl.:
*C08J 9/18* (2006.01)    *C04B 26/04* (2006.01)
*C04B 103/00* (2006.01)    *B32B 1/00* (2006.01)
*H01Q 15/08* (2006.01)    *H01B 3/44* (2006.01)
*B29C 44/44* (2006.01)

(86) International application number:
**PCT/JP2005/017103**

(87) International publication number:
**WO 2006/028300 (16.03.2006 Gazette 2006/11)**

(54) **EXPANDED POLYPROPYLENE BEAD FOR FORMING A DIELECTRIC MATERIAL AND DIELECTRIC LENS MEMBER FORMED BY THE EXPANDED POLYPROPYLENE BEADS**

EXPANDIERTE POLYPROPYLENPERLE ZUR BILDUNG EINES DIELEKTRISCHEN MATERIALS UND MITTELS EXPANDIERTER POLYPROPYLENPERLEN GEBILDETES DIELEKTRISCHES LINSENTEIL

PERLE EN POLYPROPYLÈNE EXPANSÉ POUR FORMER UN MATÉRIAU DIÉLECTRIQUE ET ÉLÉMENT DE LENTILLE DIÉLECTRIQUE FORMÉ PAR PERLES EN POLYPROPYLÈNE EXPANSÉ

(84) Designated Contracting States:
**DE FR GB IT**

(30) Priority: **10.09.2004 JP 2004264102**

(43) Date of publication of application:
**13.06.2007 Bulletin 2007/24**

(73) Proprietors:
• **JSP CORPORATION**
  **Tokyo 100-0005 (JP)**
• **Sumitomo Electric Industries, Ltd.**
  **Osaka-shi, Osaka 541-0041 (JP)**

(72) Inventors:
• **TOKORO, Hisao,**
  **c/o Kanuma second Plant of JSP Corporation**
  **Tochigi 322-0014 (JP)**
• **SASAKI, Kazutoshi,**
  **c/o Kanuma second Plant of JSP Corporation**
  **Tochigi 322-0014 (JP)**
• **SHINOHARA, Mitsuru,**
  **c/o Kanuma second Plant of JSP Corporation**
  **Tochigi 322-0014 (JP)**
• **SAKAGUCHI, Masakazu,**
  **c/o Kanuma second Plant of JSP Corporation**
  **Tochigi 322-0014 (JP)**
• **KURODA, Masatoshi,**
  **c/o Osaka Works of Sumitomo Electric Ind.,Ltd.**
  **Osaka-shi, Osaka 554-0024 (JP)**
• **KIMURA, Koichi,**
  **c/o Osaka Works of Sumitomo Electric Ind.,Ltd.**
  **Osaka-shi, Osaka 554-0024 (JP)**
• **ISHIBASHI, Yoshiyuki,**
  **c/o Osaka Works of Sumitomo Electric Ind.,Ltd.**
  **Osaka-shi, Osaka 554-0024 (JP)**

(74) Representative: **Boult Wade Tennant**
**Verulam Gardens**
**70 Gray's Inn Road**
**London WC1X 8BT (GB)**

(56) References cited:
**EP-A- 0 963 827      EP-A- 1 310 518**
**EP-A1- 1 603 191      WO-A-2004/086563**

Remarks:
The file contains technical information submitted after the application was filed and not included in this specification

**EP 1 794 221 B1**

**Description**

The present invention relates to an expanded polypropylene bead for forming a dielectric material such as a dielectric lens member, and a dielectric lens member obtained by an in-moldmolding of the expanded beads.

Background Art

With the remarkable development of information communication technology and increase of the amount of information in recent years, more precision and more quickness are required for the transmission of signal information. Along with this, the use of high frequency bands is rapidly increasing. In particular, the full-scale use of the frequency band over 1 GHz, especially a frequency band between 10 to 20 GHz, has been started. As result, in satellite broad casting and satellite communication, a method for transmitting and receiving radio waves with Luneberg lens antennas is expected to be developed as an alternative to the conventional method using parabolic antennas.

In the conventional system of satellite broadcasting and satellite communication using parabolic antennas, a geostationary satellite is used in combination with a parabolic antenna oriented in fixed direction to transmit and receive radio waves. With this system, in order to transmit and receive radio waves to and from a plurality of satellites, it is necessary to change the orientation of the antenna depending on the location of the target satellite or to use a plurality of parabolic antennas. On the contrary, a Luneberg lens antenna (a spherical or hemispherical antenna provided with a Luneberg dielectric lens) can transmit and receive radio waves to and from a plurality of stationary satellites when a plurality of feeds are located on the focal position of the Luneberg lens on a cover of the antenna. Also, when a satellite or antenna as a target of communication moves as in the case of a low earth orbit satellite (LEO), the entire antenna should track the target in the case of a parabolic antenna whereas, in the case of a Luneberg lens antenna, only a small component thereof such as a receiver or transmitter should track the target. Thus, a Luneberg lens antenna does not require a large driving system and is also suitable as an antenna for a mobile body. According to the method using a Luneberg lens antenna, a large amount of information can be transmitted and received with one antenna in each residence. That is, a Luneberg lens antenna is also suitable as an antenna for receiving TV broadcasts in the age of multi-channel broadcasting.

A Luneberg lens antenna is provided with a Luneberg dielectric lens having a function of converging and focusing radio waves. The material for the Luneberg dielectric lens must have excellent dielectric characteristics (such as a uniform dielectric constant and a low dielectric loss tangent) to deal with an increasing amount of information, that is, high frequency radio waves. Also, since the antenna is usually installed on the roof of each residence, the material should be small in size and light in weight in view of efficiency and safety of the installation work.

A Luneberg dielectric lens has a spherical or hemispherical shape and comprises a plurality of concentrically stacked layers having different dielectric constants such that the dielectric constant varies, theoretically from 2 to 1, with the innermost center layer having a dielectric constant of about 2 and the outermost layer having a dielectric constant of about 1. Thus, theoretically, a Luneberg dielectric lens is so designed that the dielectric constant $\varepsilon_r$ varies from the center (r=0) to the surface (r=R) according to the equation (1) below:

$$\varepsilon_r = 2 - (r/R)^2 \qquad\qquad (1)$$

wherein $\varepsilon_r$, R and r represent the dielectric constant, the radius of the lens, and the radius at the measuring point, respectively. The dielectric constant of each of the layers is determined with reference to the value determined by the above equation (1).

In reality, however, since a molded product in which the dielectric constant is continuously varied according to an ideal curve given by the equation (1) is difficult to obtain, a Luneberg dielectric lens is produced by combining a plurality of discrete layers having different dielectric constants.

One dielectric lens of a Luneberg-type is disclosed in U. S. Patent Published Application No. 20040029985. The dielectric lens is in the form of a sphere having a core and a multiplicity of hollow spherical shells having different dielectric constants, the spherical shells surrounding the core and being concentrically overlapped to each other to form a concentric sphere. The core and the shells are each made of a foam of a synthetic resin containing a dielectric inorganic filler. Since the dielectric lens is light in weight, it can ensure the workability and safety of the installation work. However, the antenna using the dielectric lens disclosed in U. S. Patent Published Application No. 20040029985 is not enough to satisfy performance, such as antenna gain, for practical use. EP0963827A2 relates to a molded article and expanded beads of propylene resin. EP16030319A relates to a Luneberg lens and process for producing the same.

Disclosure of the Invention

An object of the present invention is to provide a dielectric lens member, constituting each layer of a dielectric lens of Luneberg lens type, having a uniform dielectric constant in such a layer and providing a practically excellent performance, and an expanded polypropylene bead capable of producing a dielectric material having a uniform dielectric constant.

The present invention provides an expanding polypropylene bead and a dielectric lens member shown in the following.

[1] An expanded polypropylene bead according to claim 1

[2] In the expanded polypropylene beads for forming a dielectric material according to [1], the ceramic includes: titanium oxide as the major component, and a fiber-like shape having an average maximum diameter of from 0.01 to 30 $\mu$m and an average maximum length of from 0.1 to 100 $\mu$m, or a granular shape having an average of a maximum length of from 0.01 to 100 $\mu$m.

[3] The expanded polypropylene bead for forming a dielectric material according to [1], wherein a cross section of the expanded beads has average cell number of from 20 to 1000/mm$^2$ of a cross-section thereof, and the average cells diameter of from 5 to 200 $\mu$m.

[4] In the expanded polypropylene bead for forming a dielectric material according to [1], the average maximum length of the expanded beads is from 0.8 to 5.0 mm.

[5] The expanded polypropylene bead for forming a dielectric material according to [1], wherein a base resin constituting the expanded bead contains a carboxylic acid-modified polyolefine.

[6] The expanded polypropylene bead for forming a dielectric material according to [1], an apparent density of the expanded bead has a standard deviation (Sd) of 0.1 g/cm$^3$ or less, and a weight of the expanded beads has a standard deviation (Sw) of 0.5 mg or less.

[7] The dielectric lens member in-mold molding expanded polypropylene beads for forming a dielectric material according to [1], in a spherical shape, a hollow spherical shape, a hemispherical shape, a hemispherical dome shape, or a divided shape thereof.

An expanded polypropylene bead of [1] formed by a polypropylene resin and a ceramic of a specified amount, having an apparent density of from 0.03 to 1.7 g/cm$^3$, also having a endothermic peak at a higher temperature side on a DSC curve obtained by a differential scanning calorimetry, and having a caloritic value of the endothermic peak at the higher temperature side corresponding to from 2 to 35 % of a caloritic value of the peaks of the whole endothermic peaks, is regulated in a secondary expansion property, a fuse-bond property and a strength of the expanded bead in an in-mold molding operation, relating to an evenness in the apparent density of a foamed article formed from the expanded beads, and can therefore provide, by an in-mold molding operation, a dielectric material showing a uniform dielectric constant.

An expanded polypropylene bead of [2], containing a specified ceramic, can efficiently adjust the dielectric constant under a suitable apparent density.

An expanded polypropylene bead of [3] can exhibit a suitable secondary expansion in an in-mold molding, also can exhibit an excellent fuse-bond property between the expanded beads and has a satisfactory in-mold molding property, thereby providing a dielectric material of an excellent dimensional accuracy from the expanded beads. Also it has an average cell diameter far smaller than 1/10 of a wavelength of the frequency to be used. Therefore, an in-mold molding operation of such expanded beads allows to obtain a dielectric material of a more uniform dielectric constant.

A expanded polypropylene bead of [4] is excellent in a filling property and a foaming property in the in-mold molding operation, and an in-mold molding operation allows to obtain a dielectric material of a more uniform dielectric constant.

A expanded polypropylene bead of [5] shows an excellent affinity between the polypropylene resin and the ceramic, thereby providing a dielectric material of a more uniform dielectric constant by an in-mold molding operation.

A expanded polypropylene bead of [6] is particularly excellent in a uniformity of a ceramic content in the expanded beads, thereby providing a dielectric material of a more uniform dielectric constant by an in-mold molding operation.

A dielectric lens member of a spherical shape, a hollow spherical shape, ahemisphericalshape, a hemispherical dome shape or a divided shape thereof according to [7] has a uniformdielectric constant and shows an excellent performance in the practice.

Brief description of the Drawings

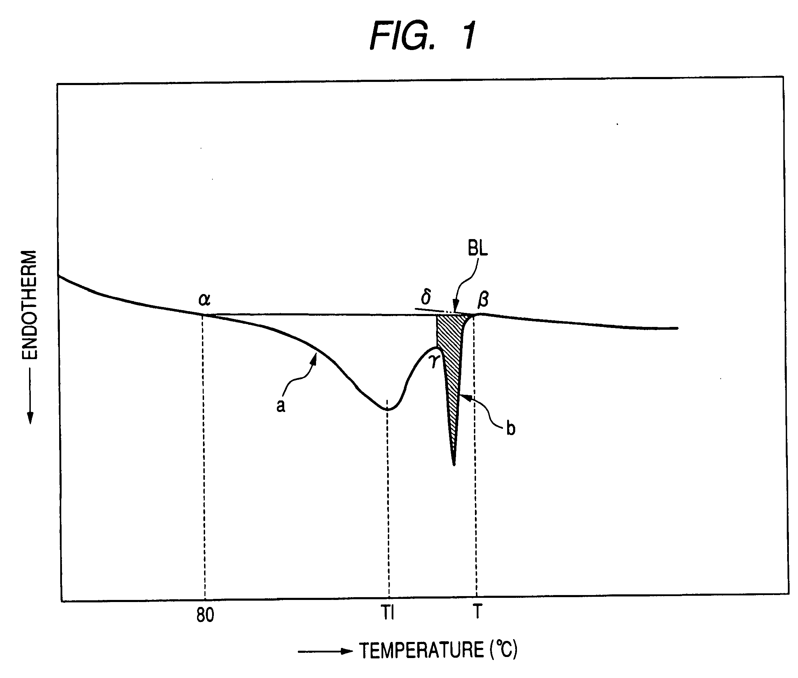

Fig. 1 shows an example of a chart of an initial DSC curve of an expanded polypropylene resin bead having a high temperature peak.

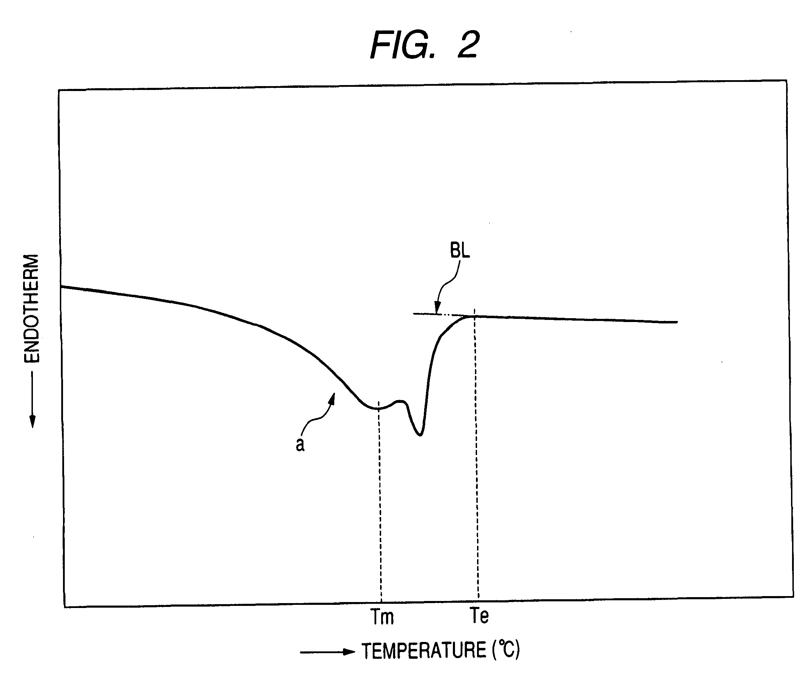

Fig. 2 shows an example of a chart of a second time DSC curve of a polypropylene resin bead.
Fig. 3 is a view showing an example of a dielectric lens member.
Fig. 4 (a) is an elevation view schematically illustrating a device for measuring the specific gravity of an expanded bead; Fig. 4(b) is a side view of Fig. 4(a).
Fig. 5 (a) is a plan view of a dome-shaped layer showing the sampling positions at which samples are cut out from the dome-shaped layer for the measure of their dielectric constants; and Fig. 5(b) is a sectional view of Fig. 5(a).

Best Mode for Carrying Out the Invention

In the following, expanded polypropylene beads of the invention for forming a dielectric material will be explained in detail, particularly by examples of an expanded polypropylene beads of the invention for forming a dielectric lens member, and a dielectric lens member obtained by an in-mold molding of the expanded polypropylene beads for forming a dielectric material.
However, the expanded polypropylene bead of the invention for forming a dielectric material is not restricted to an expanded polypropylene bead for forming a dielectric lens member.
The expanded polypropylene beads for forming a dielectric material (hereinafter also called simply expanded bead) is formed by a polypropylene resin containing a ceramic in an amount of from 10 to 80 wt%.
The term "polypropylene resin" as used herein is intended to refer to a propylene homopolymer or a copolymer of propylene with one or more comonomers having a propylene monomer unit content of at least 70 mole %, preferably at least 80 mole %. Examples of the propylene copolymer include propylene-ethylene random copolymers, propylene-ethylene block copolymers, propylene-butene random copolymers and propylene-ethylene-butene random terpolymers.
In the exemplary embodiment of the invention, another polymer may be mixed with the polypropylene resin within such an extent as not to hinder the intended effects of the exemplary embodiment.
The polypropylene resin constituting the expanded bead of the invention contains a ceramic in an amount of from 10 to 80 wt%. An excessively low content of the ceramic may hinder a regulation of the dielectric constant to a desired range. On the other hand, an excessively high content of the ceramic may deteriorate in-mold molding properties such as a fuse-bond property or a foaming property, whereby a satisfactory foamed article of the expanded beads may not be obtained. An excessive content of the ceramic at first hinders formation of satisfactory expanded beads. Therefore, the content of the ceramic is preferably from 15 to 70 wt%, and more preferably from 20 to 65 wt% in order to obtain a satisfactory expanded bead without a breakage in the cell membrane, and to attain a little shrinkage, an excellent dimensional accuracy, a satisfactory appearance and an excellent dielectric characteristics in the formed member of the expanded beads.
As used herein, the ceramic content per unit weight Mw (wt%) of an expanded beads is measured as follows. Sample beads having a weight of Wm is combusted in an oven at 600°C. The weight Wr of the combustion residues is then measured. The ceramic content per unit weight (wt%) of the sample is calculated from:

$$Mw \ (wt \ \%) \ = (Wr/Wm \times 100).$$

The ceramic content per unit weight (wt%) of the expanded bead is equal to the ceramic content per unit weight (wt%) of a foamed foam article from which the expanded beads is produced. As will hereinafter be described, the ceramic content per unit volume Mv (g/cm$^3$) of an expanded bead is given as follows:

$$Mv \ (g/cm^3) \ = \ D \ (g/cm^3) \ \times \ Mw \ (wt \ \%)/100$$

wherein D is the apparent density of the expanded bead and Mw is as defined above.
Any ceramic may be used in the present invention as long as it has a high dielectric constant and can be uniformly dispersed in a thermoplastic resin. A ceramic containing titanium oxide as its major ingredient is preferable because of its high dielectric constant, low specific gravity and excellent dielectric characteristics. The ceramic containing titanium oxide as its major ingredient is preferably titanium oxide or a ceramic having a composition represented by the formula $MO \cdot nTiO_2$ (wherein M represents one or more divalent metals and n is an integer of 1 or more). Examples of the divalent metal which is represented by M in the above-mentioned formula include, but not limited to, alkaline earth metals such as barium, strontium, calcium and magnesium, and lead.

The alkaline earth metal titanate and lead titanate represented by the above formula $MO \cdot nTiO_2$ can be produced, for example, by reacting a mixture of titanium oxide with one or more alkaline earth metal or lead compounds, such as a salt, an oxide, a hydroxide, an inorganic acid salt or an organic acid salt of the alkaline earthmetal or lead, at a temperature of 500 to 1400°C. Titanium oxide, one of the raw materials, can be produced by a suitable known method described in, for example, Japanese Examined Patent Application (Kokoku Publication) No. H06-88786, Japanese Unexamined Patent Application (Kokai Publication) No.H05-221795 or Japanese Unexamined Patent Application (Kokai Publication) No. H10-95617.

The reaction of titanium oxide with an alkaline earth metal salt or a lead salt is well known in the art and can be carried out by, for example, a hydrothermal method, a calcination method, a wet deposition method or a flux method. Specific examples of alkaline earth metal titanate and lead titanate include barium titanate, calcium titanate, magnesium titanate, strontium titanate, barium strontium titanate, barium calcium titanate, calcium strontium titanate and lead titanate. Above all, calcium titanate is particularly preferably used since it has low dielectric loss at a high frequency band. These titanates may be used singly or in combination with two or more thereof and also used in conjunction with one or more other ceramic materials such as titanium oxide.

The ceramic may be preferably in a fibrous form (for example, in the form of fibers, columns or needles), in a granular form (for example, in the form of spheres, near-spheres, ellipsoidal spheres or near-ellipsoidal spheres) or in a plate-like form (for example, in the form of scales, micaceous or flakes) for reasons of efficiency of kneading with a resin and uniform dispersibility in a resin matrix. A fibrous or plate-like ceramic having a mean value of maximum diameters in the range of 0.1 to 10 $\mu$m is particularly preferably used. If desired, fibrous and plate-like ceramics may be used in combination. For reasons of freedom of breakage of cells of the expanded resin beads and good efficiency of adjustment of dielectric constant, the fibrous ceramic has a mean value of the maximum diameters thereof (hereinafter referred to as average maximum diameter) of 0.01 to 30 $\mu$m, more preferably 0.1 to 10 $\mu$m, most preferably 0.1 to 1 $\mu$m, an average fiber length of 0.1 to 100 $\mu$m, more preferably 0.5 to 50 $\mu$m, most preferably 3 to 50 $\mu$m and an aspect ratio (average fiber length/average maximum diameter) of 3 to 30, more preferably 5 to 20.

Also, the size of the ceramic comprisingplate-like titanium oxide is not specifically limited. For the same reasons as above, the plate-like ceramic preferably has a mean value of the maximum length thereof (hereinafter referred to as average maximum length) of 0.01 to 100 $\mu$m, more preferably 0.01 to 50 $\mu$m, most preferably 0.5 to 20 $\mu$m, a mean value of the maximum thickness (hereinafter referred to as average maximum thickness) of 0.01 to 10 $\mu$m, more preferably 0.05 to 5 $\mu$m, and an aspect ratio (average maximum length/average maximum thickness) of 3 to 100, more preferably of 5 to 50. For the same reasons as above, the granular ceramic has a mean value of the maximum length thereof (hereinafter referred to as average maximum length) of 0.01 to 100 $\mu$m, more preferably 0.01 to 30 $\mu$m, most preferably 0.1 to 1 $\mu$m.

As used in the present specification and appended claims, the average maximum diameter, average fiber length, average maximum length and average maximum thickness of the fibrous, plate-like and granular ceramics are measured using an electron photomicroscope. Arbitrarily selected 100 ceramic particles are measured for their maximum diameters, lengths, maximum lengths and/or maximum thicknesses. The average maximum diameter, average fiber length, average maximum length and average maximum thickness are each an arithmetic mean of the 100 samples.

The expanded bead of the exemplary embodiment of the invention contains, in the base resin, from which the dielectric lens member or the dielectric material of the present invention is formed, contain a polar group-containing polymer, especially a carboxylic acid-modified polyolefine containing a carboxylic acid group-containing comonomer, since the uniformity of the apparent density of the expanded beads is improved. The carboxylic acid group-containing comonomer may be, for example, an acid anhydride such as acetic anhydride, succinic anhydride, maleic anhydride or phthalic anhydride, or a carboxylic acid such as methacrylic acid, maleic acid or acrylic acid. In addition, the carboxylic acid-modified polyolefine is preferably a carboxylic acid-modified polypropylene. For example, a maleic anhydride-modified polypropylene resin is preferably. The carboxylic acid-modified polyolefine resin is preferably a graft copolymer having a content of the graft comonomer of preferably 0.5 to 15 wt%, more preferably 1 to 8 wt%, for reasons of improved affinity of the base resin with the ceramic.

The carboxylic acid-modified polyolefine is preferably blended together with the ceramic and the polypropylene resin.

The amount of the carboxylic acid-modified polyolefine is preferably at least 0.15 wt%, more preferably 0.15 to 1.5 wt%, most preferably 0.2 to 1.0 wt%, based on a total weight of the polypropylene resin, the carboxylic acid-modified polyolefine and the ceramic. Since such a base resin has improved affinity with the ceramic so that the apparent density of expanded beads formed of the base resin have uniform apparent density.

The carboxylic acid-modified polyolefine may be incorporated into the base resin by kneading the polypropylene resin, the ceramic and the carboxylic acid-modified polyolefine or by kneading the thermoplastic resin, the ceramic and a master batch containing the carboxylic acid-modified polyolefine and the thermoplastic resin. Alternatively, the ceramic is first surface-treated with the carboxylic acid-modified polyolefine, the surface-treated ceramic being subsequently kneaded with the polypropylene resin. The resulting kneaded mixture is pelletized. The pellets (resin particles) are then foamed and expanded to obtain expanded beads which are thereafter fuse-bonded in a mold to obtain a foamed article foam molding containing the ceramic dispersed in the foam of the base resin containing the carboxylic acid-modified polyolefine.

One or more additives may also be added to the expanded bead as long as it does not adversely affect the desired effects of the present invention. The additives may be, for example, an antioxidant, an ultraviolet absorbing agent, antistatic agent, a flame retardant, a metal deactivator, a pigment, a dye, a nucleating agent and a cell size adjusting agent. Illustrative of suitable cell size adjusting agents are zinc borate, talc, calcium carbonate, borax, aluminum hydroxide and other inorganic powders. These additives may be incorporated into the expanded bead by kneading the base resin and the ceramic together with the additives. The kneaded mass is pelletized to form resin particles (pellets), from which an expanded bead is produced.

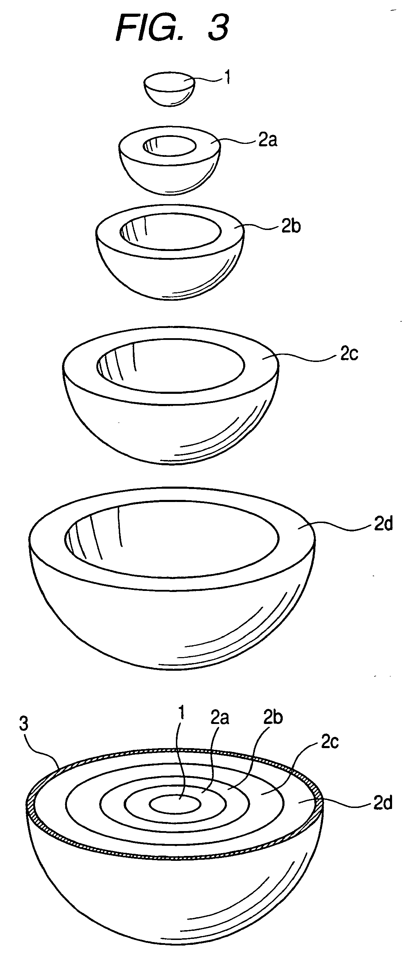

The expanded bead of the invention has an apparent density of from 0.03 to 1. 7 g/cm$^3$. Specified expanded beads meeting such range allows to obtain a dielectric lens member, constituting each layer of a dielectric lens of a multi-layered structure as shown in Fig. 3(a), in which the dielectric constant is about 2 in a central layer, then decreases gradually toward the outside and becomes about 1 in an outermost layer. As the expanded bead of the exemplary embodiment of the invention is formed by a resin containing a large amount of the ceramic for the purpose of regulating dielectric constant, a low apparent density is difficult to attain since the cell membrane is easily breakable at the foaming operation and the expanded bead is difficult to form. Also in case of executing an in-moldmolding of the expanded beads of an excessively low apparent density in a mold, since the expanded beads have a low compression strength, the expanded beads in the vicinity of an internal surfaceof the mold are strongly pressed to the mold at the in-mold molding operation, whereby the formed foam article of the expanded beads may show a higher density in the vicinity of the surface in comparison with that in the interior and may become unable to show a uniform density. Therefore, an excessively low density of the expanded bead leads to a variation in the dielectric constant. On the other hand, an excessively high apparent density is unable to obtain a light-weight formed foam article. Also expanded beads with an excessively high apparent density, obtained by foaming resin particles, show an evident variation in the apparent density, thus inducing a variation in the dielectric constant in a formed foam article obtained from such expanded beads. In order to produce satisfactory expanded beads without a breakage of the cell membrane, and to obtain a formed foam article of the expanded beads with little shrinkage, an excellent dimensional accuracy, a satisfactory appearance and an excellent dielectric lens property, the apparent density is preferably from 0.05 to 1.2 g/cm$^3$, more preferably from 0.1 to 1.0 g/cm$^3$, and particularly preferably from 0.2 to 0.8 g/cm$^3$.

The apparent density of the expanded beads in the present specification can be determined by preparing a measuring cylinder containing ethanol of 23°C, arbitrary selected 1000 or more expanded beads (expanded bead group of a weight W1) are allowed to stand in the atmosphere at 23°C under a relative humidity of 50% for 48 hrs., for example with a metal mesh, and dividing the weight W1 (g) of the expanded bead group, put into the measuring cylinder, by a volume V1 (cm$^3$) of the expanded bead group, read from an increase in the liquid level of ethanol (W1/V1). In the present specification, the apparent density of the expanded bead is determined by the afore mentioned method, except for determining a standard deviation of the apparent density of the expanded beads.

The expanded bead of the invention shows, it is preferred that the foamed article obtained there from shows a high temperature endothermic peak (hereinafter referred to as intrinsic peak), in a DSC curve thereof, in addition to an intrinsic endothermic peak (hereinafter referred to as intrinsic peak) located at a lower temperature side of the high temperature peak and that the calorific value ($\Delta H_h$ J/g) of the high temperature peak be 10 to 30 % of the calorific value ($\Delta H_t$ J/g) of the whole endothermic peaks, for reasons of good secondary expansion, good fuse-bond and mechanical strength of the expanded beads, in addition, good dimensional stability, small variation of the apparent density of the foamed article obtained there from. The percentage calorific value ($\Delta H_h/dH_t \times 100$) of the high temperature peak based on the whole endothermic peaks is 10 to 30 %. The calorific value of the whole endothermic peaks ($\Delta H_h$) is a sum of the calorific values of the high temperature peak(s) and intrinsic peak(s).

The calorific value of the high temperature peak of the expanded bead may be adjusted by a heat process time and a foaming temperature of the resin particles for foaming. The expanded polypropylene resin beads providing a DSC curve having a high temperature peak may be produced by, for example, heating a dispersion containing polypropylene resin particles (pellets) to a temperature higher than the melting point (Tm) of the polypropylene resin but not exceeding the melt completion temperature (Te) thereof for a time sufficient to increase the calorific value of the high temperature peak. The calorific value of the high temperature peak of the expanded beads may be reduced when the expansion is carried out at a high temperature within the suitable range of the expansion temperature. The calorific value of the high temperature peak and the calorific value of the whole endothermic peaks of expanded beads are nearly equal to those of the foamed article obtained from the expanded beads.

Incidentally, the caloritic value of high temperature peak of the foamed article may be adjusted by controlling the caloritic value of the expanded beads from which the foamed article is produced.

The calorific value of the high temperature peak of the expanded beads and the foamed article is the amount of endotherm and corresponds to the area of an endothermic peak (a high temperature peak) "b" which is present on a higher temperature side of an endothermic peak (intrinsic peak) "a" in a first DSC curve which is shown in FIG. 3. These peaks are obtained by the differential scanning calorimetric analysis wherein 2 to 4 mg of a sample obtained from the expanded beads or the foamed article are heated from room temperature (15 to 40°C) to 220°C at a heating rate of 10°C/minute.

More specifically, the calorific value maybe determined as follows. In the DSC curve as shown in FIG. 3, a straight line ($\alpha$-$\beta$) extending between the point $\alpha$ in the curve at 80°C and the point $\beta$ in the curve at a melt completion temperature T of the expanded beads is drawn. The melt completion temperature T is a temperature of an intersection $\beta$ at which the high temperature peak "b" meets the base line BL. Next, a line which is parallel with the ordinate and which passes a point $\gamma$ in the curve at the bottom of the valley between the intrinsic peak "a" and the high temperature peak "b" is drawn. This line crosses the line ($\alpha$-$\beta$) at a point $\delta$. The area of the high temperature peak "b" is the area (shaded portion in FIG. 3) defined by the curve of the high temperature peak "b"; the line ($\delta$-$\beta$), and the line ($\gamma$-$\delta$) and corresponds to the calorific value (amount of endotherm) of the high temperature peak "b". The total of the calorific values of the high temperature peak and the intrinsic peak corresponds to the total area defined by the line ($\alpha$-$\beta$) and the DSC curve.

The high temperature peak "b" of the expanded bead generally appears at a temperature ranging from (T1 + 5°C) to (T1 + 30°C), more generally ranging from (T1 + 8°C) to (T1 + 25°C) where T1 is the temperature of the intrinsic peak "a".

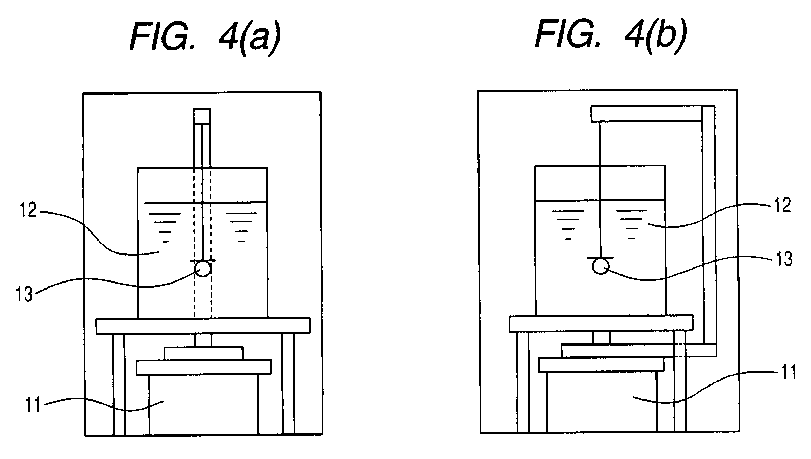

As used herein, the term "melting point of the polypropylene resin" is intended to refer to that measured by DSC analysis wherein a sample resin or the expanded bead is heated from room temperature (10 to 40°C) to 220°C at a rate of 10°C/min. The sample is then immediately cooled to about 40°C (40 to 50°C) at a rate of 10°C/min and is measured again for a DSC curve by heating to 220°C at a rate of 10°C/min to obtain a second DSC curve as shown in FIG. 4. The temperature Tm of the endothermic peak in the second DSC curve as shown in Fig. 4 represents the melting point. When a plurality of endothermic peaks are observed in the second DSC curve, the melting point Tm is the peak temperature of that peak which has the greatest peak area among those peaks. However, when there are a plurality of peaks and when the next largest peak has an area not smaller than 60 % of the largest peak, then the melting point is the arithmetic mean of the temperatures of the largest and the next largest peaks. The melt completion temperature of the polypropylene resin is a temperature Te of an intersection $\beta$ at which the high temperature peak meets the base line BL in the second DSC curve.

It is preferred that each of the expanded bead dielectric lens of the present invention have an average cell number of 20 to 1,000 per mm$^2$ of a cross-section thereof and an average cell diameter of 5 to 200 $\mu$m for reasons of dimensional stability and uniform dielectric constant of foamed article obtained there foam. The average cell number and average cell diameter of a foamed article are nearly equal to those of the expanded beads from which the foamed article is produced. Thus, the average cell number and average cell diameter of a foamed article are controlled by controlling the average cell number and average cell diameter of the expanded beads. The expanded beads having the above-specified average cell number and average cell diameter show suitable secondary expansion property and good fuse-bonding property.

The average cell number and average cell diameter of the expanded beads may be controlled by controlling the amount of the ceramic and the conditions, such as pressure and temperature, under which the expansion and foaming of resin particles (pellets) are performed. More particularly, when the expanded beads are produced by a dispersion method in which a dispersion of resin particles in a dispersing medium contained in a closed vessel and maintained at an elevated temperature and a high pressure is discharged from an outlet of the closed vessel to a lower pressure atmosphere, attachment of an orifice to the outlet so as to provide a large pressure gradient can reduce the average cell diameter and increase the average cell number. When the outlet is heated at an elevated temperature to perform the expansion at a high temperature, the average cell diameter increases and the average cell number decreases.

In the present specification, an average cell number on the cross section of the expanded bead can be measured by bisecting a expanded bead in substantially equal portions, counting all the cells on the cross section magnified under a microscope, and dividing the number of the cells by the area of the cross section. Also an average cell diameter can be measured by bisecting a expanded bead in substantially equal portions, measuring diameters of all the cells on the cross section magnified under a microscope, and calculating an average of the diameters. In the measurement of the cell diameter, on a cross section formed by bisecting the expanded bead in substantially equal portions, a largest value among the cell diameters in all the planar directions on such cross section on each cell is taken as the diameter of such cell.

The expanded beads for use in the production of the foamed article are preferably spherical, near-spherical, ellipsoidal, columnar or near-columnar in shape, since such beads can be uniformly filled in a mold cavity, which in turn results in a uniform apparent density of the foamed article obtained.

The average maximum length of the expanded beads is generally 0.5 to 10 mm, preferably 0.8 to 5.0 mm, more preferably 1.0 to 3.0 mm, for reasons of minimizing variation of the apparent density of the foam molding. The average maximum length of the expanded beads is the arithmetic mean of the maximum lengths of arbitrarily selected 50 expanded beads measured using a caliper. The maximum length of a spherical expanded bead is the diameter thereof. In the case of an expanded bead in a columnar shape, the maximum length is determined as follows. The axial direction of the columnar expanded bead is chosen to be the Z-axis. The maximum of the dimensions of the expanded bead in the direction of the Z-axis is determined. Also, the maximum of the dimensions of the expanded bead in the direction of the X-axis and the maximum of the dimensions of the expanded bead in the direction of the Y-axis are determined. The maximum length is the greatest of the three maximum dimensions in the X-, Y- and Z-axes.

When the expanded beads are spherical, the average maximum length thereof is preferably 0.8 to 5.0 mm, more preferably 1.0 to 3.0 mm. When the expanded beads are columnar, the average (L) of the maximum length in the Z-axis and the average (D) of the maximum diameter in the X- or Y-axis thereof are each in the range of 0.8 to 5.0 mm, preferably 1.0 to 3.0 mm. In this case, the aspect ratio L/D is preferably 0.8 to 1.2.

The average of the maximum length (L) and the average of the maximum diameter (D) of the columnar expanded beads may be controlled during the pelletization step in which a kneaded mass of the base resin and ceramic is extruded in the form of strands and in which the strands are cut to obtain resin particles (pellets). By controlling the diameter and cut length of the strands, namely by controlling the shape of the pellets, the length L and aspect ratio L/D of the expanded beads may be controlled. Spherical expanded beads may be prepared using spherical resin particles. Spherical resin particles may be prepared by, for example, cutting strands in warm water.

It is preferred that the foamed article constituting the dielectric lens member of the present invention have an open cell content (in accordance with ASTM D2856-70, Procedure C) of 40 % or less, more preferably 30 % or less, most preferably 20 % or less, for reasons of high mechanical strength and low variation of apparent density.

A method for producing the dielectric lens member of the present invention will be next described. The dielectric lens comprises a hemispherical center layer and a plurality of hemispherical dome-shaped layers. Each of the center and dome-shaped layers is a foamed article obtained by heating expanded beads filled in a mold with steam. The expanded beads may be prepared by foaming and expanding resin particles. Production of resin particles, expanded beads and foamed article will be described in more detail below.

A spherical expanded bead is produced by preparing a spherical resin particle for example by a cutting a melt resin extruded from a multi-hole die in warm water.

In the present specification, an average (L) of the maximum heights of the expanded beads and an average (D) of the maximum diameters are obtained by measuring the dimensions with a caliper on 50 expanded beads arbitrarily taken out from a group of expanded beads and determining an arithmetic average of the measured dimensions.

The expanded bead of the present invention can be produced by any known method for producing expanded beads, but is preferably produced by a method of heating resin particles for foaming in a closed container in the presence of a blowing agent under dispersion in a dispersion medium such as water thereby impregnating the resin particles with the blowing agent, and then releasing the resin particles and the dispersion medium to a low pressure environment at a temperature where expanded beads are formed by a pressure reduction (such method being hereinafter called "dispersion method").

Resin particles may be prepared by feeding a base resin such as a polypropylene resin, a ceramic and, if desired, one or more additives such as a polar group-containing polymer (e.g. maleic anhydride-modified polypropylene) to an extruder. The feed is then heated, melted and kneaded in the extruder and, thereafter, is extruded through a die in the form of strands. The strands are cooled and cut to obtain resin particles (pellets) .

The resin particles are then foamed and expanded by any suitable method, preferably by a dispersion method in which the resin particles are dispersed in a suitable dispersing medium such as an aqueous medium in a closed vessel. The dispersion in the vessel is heated in the presence of a blowing agent to impregnate the resin particles with the blowing agent. The dispersion is then discharged from the vessel to a lower pressure zone at a temperature sufficient for the resin particles to foam and expand.

To prevent fuse-bonding of the resinparticles, a dispersing agent which may be an organic or inorganic powder is preferably added to the dispersing medium. Particularly suitable is the use of fine particles of an inorganic material such as natural or synthetic clay mineral (kaolin, mica or clay), aluminum oxide, titanium oxide, basic magnesium carbonate, basic zinc carbonate, calcium carbonate or iron oxide. These inorganic materials may be used singly or in combination of two or more thereof in an amount of 0.001 to 5 parts by weight per 100 parts by weight of the resin particles.

The amount of the blowing agent is suitably selected in consideration of the kind of the blowing agent, expansion temperature and apparent density of the expanded beads to be produced. When nitrogen gas is used as the blowing agent and water is used as the dispersing medium, the nitrogen gas is used in an amount so that the pressure in the closed vessel immediately before the start of the discharge of the dispersion, namely the pressure in the upper space of the closed vessel, is in the range of 0.6 to 6 MPaG. The pressure in the upper space of the vessel is preferably made higher as the apparent density of the expanded beads to be produced is low. The pressure in the upper space of the vessel is preferably made lower as the apparent density of the expanded beads to be produced is high.

The blowing agent used in the dispersion method may be an organic physical blowing agent or an inorganic physical blowing agent. Examples of the organic physical blowing agents include aliphatic hydrocarbons such as propane, butane, pentane, hexane and heptane, and alicyclic hydrocarbons such as cyclobutane and cyclohexane. Examples of inorganic physical blowing agents include air, nitrogen, carbon dioxide, oxygen, argon and water. These organic and inorganic blowing agents may be used singly or as a mixture of two or more. Particularly suitably used is a blowing agent containing, as its essential ingredient, one or more an inorganic physical blowing agent selected from nitrogen, oxygen, air, carbon dioxide and water. For reasons of stability (uniformity) of apparent density of expanded beads, low costs and freedomof environmental problem, the use of air, carbon dioxide or water is preferred. Water such as ion-exchanged water used as the dispersing medium for dispersing the resin particles therein may be used as the blowing agent as such.

A dielectric lens member of the exemplary embodiment of the invention can be produced by a batch type molding method, called in-mold molding method, in which the expanded beads of the invention, after an elevation of an internal pressure (gauge pressure) of the expanded beads up to 0 to 0.3 MPa if necessary, are filled in a mold of a known structure, then heated in the mold and inflated by a steam supply to cause a mutual fuse-bond of the expanded beads, and taken out from the mold after cooling.

If desired, before the molding is carried out, the expanded beads may be treated with a pressurized gas to increase the inside pressure thereof to 0.1 to 0.6 MPaG. The treated beads are then heated with steam or hot air so that the apparent density of the expanded beads is further reduced.

When the increase of the inside pressure of the expanded beads is desired, the expanded beads are allowed to stand in a closed vessel to which a pressurized gas has been fed for a suitable period of time so that the pressurized gas penetrates into the cells. Any gas may be used for the pressure increasing treatment as long as it is in the form of gas under conditions where the expanded beads are treated. The gas may be suitably a gas containing an inorganic gas as a major component. Examples of the inorganic gas include nitrogen, oxygen, air, carbon dioxide and argon. Nitrogen or air is suitably used for reasons of costs and freedom of environmental problems.

In the expanded bead of the invention, the apparent density preferably has a standard deviation (Sd) of 0.1 $g/cm^3$ or less, more preferably 0.05 $g/cm^3$ or less, and the weight of the expanded bead preferably has a standard deviation (Sw) of 0.5 mg or less, more preferably 0.3 mg or less, in order to obtain a formed foam article of the expanded beads with a uniform dielectric constant (for a constant content of ceramic per unit weight in the resin particles for foaming). In forming a dielectric lens of a multi-layered structure as shown in Fig. 3(b), a larger number of layers leads to a better antenna performance. However, since the dielectric constants of the dielectric lens members constituting the respective layers have to be made smaller in succession theoretically from 2 to 1 toward the outer side, an increase in the number of layers gives a narrower permissible range for the dielectric constant in the formed dielectric lens member of the expanded beads constituting each layer, and even a small variation in the dielectric constant may perturb a successive change of the dielectric constant and may induce an inverted change of the dielectric constant between the adjacent layers, so that a sufficient antenna performance is difficult to attain unless the uniformity in the dielectric constant is further improved. Inview of such a situation, the aforementioned standard deviations in the apparent density and the weight of the expanded beads allow to securely obtain a Luneberg lens type antenna of a high performance, constituted of dielectric lens member with from 3 to 40 layers, further with from 5 to 30 layers and particularly with from 8 to 20 layers.

In the apparent density of the expanded bead, a standard deviation (Sd) of 0.1 $g/cm^3$ or less can be achieved, in the dispersion method, by a method of applying a pressure so as to maintain a constant pressure in the closed container at the release of the foamable resin particles therefrom, a method of releasing the foamable resin particles into a pressurized environment, a method of gradually reducing the revolution of agitating blades in the closed container at the release of the foamable resin particles, a method of classifying the expanded beads by volume by a sieving, a method of classifying the expanded beads by specific gravity by an air classifier or a gravity separator, or a combination of these methods. The method of classifying the expanded beads by volume by a sieving is simplest, and the classifying method by a sieve may utilize a vibrating sieve for classifying the expanded beads of different particle sizes by a mesh. Among the aforementioned methods, a method by a gravity separator is most preferable.

It is important that the apparent density of each of the foamed article constituting the dielectric lens member of the present invention has a standard deviation (Sd) of 0.07 $g/cm^3$ or less. When the standard deviation (Sd) is greater than 0.07 $g/cm^3$, the variation of the apparent density is so large that a variation of dielectric characteristics of the molding may be caused, resulting in a failure to obtain a good dielectric lens. Thus, the standard deviation (Sd) of the apparent density is preferably 0.05 $g/cm^3$ or less, more preferably 0.03 $g/cm^3$ or less, most preferably 0.02 $g/cm^3$ or less.

The small standard deviation (Sd) of the apparent density of 0.07 $g/cm^3$ or less may be obtained by using specific expanded beads whose bead has a standard deviation of 0.5 mg or less and whose apparent density has a standard deviation of 0.1 $g/cm^3$ or less for the preparation of the foamed article. Such expanded beads may be obtained by various methods including, for example, a method of producing resin particles having a small variation of weight, a method of expanding and foaming resin particles in a specific manner, a method of classifying expanded beads and a method in which two or more of the above methods are combined.

Resin particles having a small variation of weight may be produced by, for example, adopting various methods during the course of the pelletization process in which kneaded mixture containing the polypropylene resin and ceramic is extruded in the form of strands and in which the strands are then cooled and cut into particles. One method is to provide a guide for preventing meandering of the strands before cutting. Other methods include adjustment of the rotational speed of the cutter, adjustment of the angle of the cutter relative to the strands, use of an under-water cutting method and/or classifying the resin particles using a suitable sieve such as a rotary tubular sieve.

The method of expanding and foaming resin particles in a specific manner may be, for example, adopting a dispersion method (which will be described in detail hereinafter) in which a dispersion of softened resin particles in a dispersion medium is discharged from a closed vessel while applying a pressure to the closed vessel so as to maintain the pressure within the closed vessel constant; adopting a dispersion method in which the dispersion is discharged from the closed vessel to a pressurized atmosphere; adopting a dispersion method in which the dispersion is discharged from the closed vessel while gradually reducing the rotational speed of a stirrer with which the dispersion within the closed vessel is stirred; and adopting two or more of the above method in combination.

The method of classifyingexpandedbeadsmaybe, for example, sieving the expanded beads into desired particle sizes or classifying the expanded beads by a gravity separator or by an air classifier. Two or more classified or unclassified expanded beads may be blended to obtain expanded beads having a desired apparent density.

In order to attain the small standard deviation (Sd) of the apparent density of 0.07 g/cm$^3$ or less, it is also effective to mold the expanded beads in such a manner that the expanded beads are prevented from being subjected to high compressive forces within the mold cavity. To this end, it is advantageous not to impart a high secondary expansion power to the expanded beads. It is also preferable to reduce the pressure applied to the expanded beads at the time of filling the expanded beads in the mold cavity. When the expanded beads are molded while being subjected to high compressive forces, a surface region of the foamed article has a greater apparent density than that of an inner region, resulting in a variation of the dielectric constant of the foamed article.

The standard deviation of the apparent density of the expanded beads is determined by measuring the apparent density of each of arbitrarily selected 1000 expanded beads. From the results of the measurement, the standard deviation is calculated. The apparent density is measured as follows:

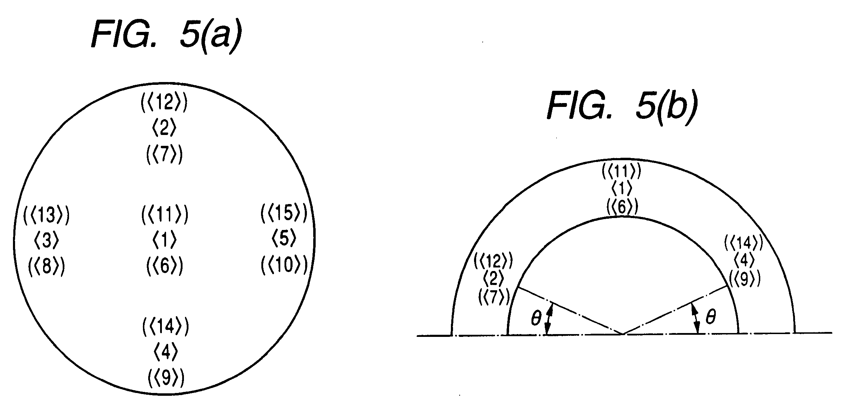

1. Arbitrarily selected 1000 expanded beads are allowed to stand in the atmosphere at 23°C under a relative humidity of 50 % for 48 hours. The weight (W1) of each of the 1000 expanded beads is then measured up to the second decimal place.
2. Using a densimeter, the specific gravity ($\rho$1) of ethanol (purity: 99 % or higher) is measured up to the third decimal place.
3. A density measuring system as shown in FIGS. 5(a) and 5(b) is provided. The system includes a microbalance 11, and a vessel containing the above ethanol 12.
4. Each of the expanded beads (designated as 13) is immersed in the ethanol to measure the weight (W2) of the immersed bead up to the second decimal place. The weight W2 is a difference between gravity and buoyancy acted on the expanded bead.
5. The specific gravity ($\rho$0) of the expanded bead is calculated using the following formula:

$$\rho 0 = W1 / \{(W1 - W2) / \rho 1\}$$

6. The apparent density (g/cm$^3$) of the expanded bead is calculated using the following formula:

$$\text{Apparent density} = \rho \times \rho 0$$

wherein $\rho$ is the density of pure water (namely 1 g/cm$^3$).

The standard deviation of the weight of the expanded beads is determined by measuring the weight (mg) of each of arbitrarily selected 1000 expanded beads, which have been allowed to stand in the atmosphere at 23°C under a relative humidity of 50 % for 48 hours, up to the third decimal place.

The standard deviation (Sd) of the apparent density of a foamed article is measured as follows. From the foamed article, fifteen (15) rectangular parallelepiped specimens each having a length of 16 mm, a width of 10 mm and a thickness of 8 mm are cut out at the positions <1> to <15> shown in FIG. 5(a). Each of the three positions <1>, <6> and <11>, is near the top of the foamed article and is not spaced more than 5 cm from the top of the foam molding. The positions <2> to <5> are angularly equally spaced apart from each other and each spaced an angle of about 20 degrees (shown as Θ in FIG. 5(b)) from the plane including the annular edge of the foamed article. The positions <7> to <10> and the positions <12> to <15> are also arranged similarly to the positions <2> to <5>. The axis in the thickness direction of each of the cut samples is in parallel or nearly in parallel with the radial direction of the hemispherical foamed article. When the thickness of the foamed article is too small to cut out samples having a thickness of 8 mm, cutting is carried out so that the thickness of the sample is as large as possible. Each of the fifteen specimens is measured for the apparent density. From the results of the measurement, the standard deviation (Sd) of the apparent density is calculated. The apparent density is determined by measuring the weight of the sample up to the second decimal place and by measuring the dimensions of the sample with an electric caliper up to the second decimal place. From the measured dimensions, the volume of the sample is calculated. The apparent density is given by dividing the weight of the sample by the volume thereof.

As used in the present specification and appended claims, the term "standard deviation" is defined as the square root of the variance.

In the weight of the expanded bead, a standard deviation (Sw) of 0.5mg or less canbe achieved, in the pelletizationprocess for forming the resin particles for foaming, by a method of improving the weight precision of the pelletization by employing a cooled and cut into particles and providing a guide for suppressing a skewing in the strand, or regulating a revolution and an angle of a rotating blade, or executing an under-water cutting, or by a method of classifying the resin particles with a rotating cylindrical sieve, and such methods may be suitably combined. In case the density is almost constant, the method of classifying the resin particles or the expanded beads by a sieving is simplest, and the classifying method by a sieve may utilize a vibrating sieve. Also there can be employed a method of classifying by specific gravity with an air classifier or a gravity separator.

The standard deviation (Sw) of the weight of the expanded bead is determined by measuring a weight (mg) to 0.001 mg of each of 1000 expanded beads arbitrarily selected from a group of expanded beads, let to stand in advance for 48 hours under conditions of a temperature of 23°C and a relative humidity of 50%, and calculating a standard deviation (Sw).

A dielectric lens member of the invention is obtained by an in-mold molding of the expanded beads of the invention, and has a spherical shape, a hollow spherical shape, a semispherical shape, a semispherical dome shape or a divided shape thereof. A Luneberg lens antenna is constructed by superposing, on a semispherical lens member 1, semispherical dome shaped lens members 2a, 2b, 2c, 2d of different radii in succession as a dielectric lens shown in Fig. 3(b) for example, then covering the surface with a cover 3 and providing an reflector (not shown) in the bottom. The semispherical lens member 1 has a dielectric constant of about 2, and the semispherical dome shaped lens member 2d of the outermost layer has a dielectric constant of about 1. Also in order to avoid a loss in the antenna gain, the superposed adjacent lens members preferably have a gap as small as possible.

Fig. 3(a) and 3(b) show a 5-layered structure employing four semispherical dome shaped lens members 2a - 2d on a semispherical lens member 1, but the invention is not limited to such 5-layered structure. Preferably, the exemplary embodiment has 5 layers or more, more preferably from 5 to 30 layers and particularlypreferably from 8 to 20 layers. Also in the spherical or semispherical Luneberg lens formed by combining the dielectric lens members, the dielectric lens preferably has a diameter of from 50 to 4000 mm.

The dielectric lens member of the spherical shape, the hollow spherical shape, the semispherical shape, the semispherical dome shape or the divided shape thereof preferably has an apparent density of from 0.03 to 1.2 g/cm$^3$, more preferably from 0.03 to 0.8 g/cm$^3$, in order to regulate the dielectric constant within a range of from about 1 to about 2 and realize a light-weight.

The aforementioned apparent density of the dielectric lens member means a overall apparent density defined in JIS K 7222 (1999). A volume of the formed foam article (the dielectric lens member) member of the expanded beads for calculating the overall apparent density is a volume calculated from external dimensions, but, in case the calculation from the external dimensions is difficult because of a complex shape, there is employed an excluding volume when the formed foam article of the expanded beads is immersed in water.

The expanded bead of the exemplary embodiment of the invention is excellent for use as a material for a dielectric lens member as explained before, but it is advantageously employable as an in-mold molding material for various dielectric materials in information communication-related electric devices such as a capacitor, a laminated circuit board, a connector or a memory.

Examples

In the following, the present invention will be clarified further by examples and comparative examples.

Examples 1 - 8 and Comparative Examples 1 - 3

A polypropylene resin shown in Table 1 and a ceramic shown in Table 2 are mixed in advance in a formulation shown in Table 3, and further kneaded and extruded by a two-axis extrusion kneader to form pellets thereby obtaining cylindrical resin particles.

Table 1

|  | type | grade | maleic anhydride content |
|---|---|---|---|
| resin 1 | propylene-ethylene copolymer | EG4A, Japan Polypro Corp. | - |
| resin 2 | maleic anhydride-modified propyleno-ethylene copolymer | H3000P, Toyo Kasei Kogyo Co., Ltd. | 6.2 wt% |
| resin 3 | maleic anhydride-modified propylene-ethylene copolymer | HH3000P, Toyo Kasei Kogyo Co., Ltd. (different lot from resin 2) | 5.1 wt% |

Table 2

|  | type | shape | dimension |
|---|---|---|---|
| C1 | calcium titanate | fibrous | average maximum diameter 0.3 $\mu$m/average length 3 $\mu$m |
| C2 | titanium oxide | spheres | average diameter 0.21 $\mu$m |
| C3 | calcium titanate | fibrous | average maximum diameter 13.1 $\mu$m/average length 75 $\mu$m |

Table 3

|  | ceramic | | polypropylene resin |
|---|---|---|---|
|  | type | amount (wt%) | amounts (wt%) |
| *Example 1 | C1 | 50 | resin 1/resin 2 (45/5) |
| *Example 2 | C1 | 50 | resin 1/resin 2 (45/5) |
| *Example 3 | C1 | 50 | resin 1/resin 2 (4515) |
| Example 4 | C2 | 60 | resin 1/resin 2 (35/5) |
| Example 5 | C2 | 60 | resin 1/resin 3 (35/5) |
| *Example 6 | C2 | 50 | resin 1 (50) |
| Example 7 | C2 | 50 | resin 1/resin 2 (47/3) |
| *Example 8 | C3 | 50 | resin 1/resin 2 (45/5) |
| Comp. Ex. 1 | C1 | 50 | resin 1/resin 2 (45/5) |
| Comp. Ex. 2 | C1 | 50 | resin 1/resin 2 (45/5) |
| Comp. Ex. 3 | C3 | 50 | resin 1/resin 2 (45/5) |
| *Reference Example | | | |

100 parts by weight of the obtained resin particles are filled in a closable container (autoclave) and dispersed in 300 parts by weight of water. Also 1.0 part by weight of aluminum oxide as an adhesion preventing agent and 0.01 parts by weight of sodium dodecylbenzene sulfonate as an auxiliary dispersant are added.

Then the autoclave is closed, and heated under agitation to a temperature lower by 5°C than a foaming temperature shown in Table 4. Then a blowing agent shown in Table 4 is introduced into the autoclave, and the temperature is maintained for 15 minutes. Then the autoclave is heated to the foaming temperature shown in Table 4, and maintained at such a temperature for 15 minutes. A pressure in the autoclave in this state is shown as a foaming pressure in Table 4. Then, while the content of the autoclave is maintained at the foaming temperature, same gas as the blowing agent is pressed into the autoclave to release the content of the autoclave into the air while maintaining the pressure in the autoclave at the foaming pressure shown in Table 4, thereby obtaining expanded beads.

In the obtained expanded beads, a ceramic content (wt%), a calorie ($\Delta H_h$) of the high temperature peak, a calorie ($\Delta H_t$) of the peaks of the entire endothermic curve, a proportion ($\Delta H_h/\Delta H_t$ x 100) of the calorie of the high temperature peak to the calorie of the peaks of the entire endothermic curve, an average cell number, an average cell diameter, an apparent density, a shape of the expanded bead, an average (D) of the maximum diameter, an average (L) of the maximum height, and a ratio (L/D) are shown in Tables 5 and 6.

Table 4

| | foaming condition | | |
|---|---|---|---|
| | foaming temp. (°C) | blowing agent | foaming pressure [gauge pres.] (MPa) |
| *Example 1 | 149.0 | air | 2.8 |
| *Example 2 | 149.0 | air | 2.0 |
| *Example 3 | 147.0 | $CO_2$ | 2.6 |
| Example 4 | 145.5 | $CO_2$ | 3.3 |
| Example 5 | 149.0 | air | 2,6 |
| *Example 6 | 148.0 | air | 2.4 |
| Example 7 | 148.5 | air | 2.0 |
| *Example 8 | 149.0 | air | 2.4 |
| Comp. Ex. 1 | 153.5 | air | 1.6 |
| Comp. Ex. 2 | 148.5 | $CO_2$ | 3.4 |
| Comp. Ex. 3 | 153.0 | air | 1.5 |
| *Reference Example | | | |

Table 5

| | shape of expanded bead | | | |
|---|---|---|---|---|
| | shape | average (D) of max. diameter (mm) | average (L) of max. height (mm) | L/D |
| *Example 1 | subst. cylindrical | 2.3 | 2.4 | 1.04 |
| *Example 2 | subst. cylindrical | 2.2 | 2.2 | 1.02 |
| *Example 3 | subst. cylindrical | 2.7 | 3.0 | 1.11 |
| Example 4 | subst. cylindrical | 3.3 | 3.2 | 0.97 |
| Example 5 | subst. cylindrical | 2.1 | 2.1 | 1.01 |
| *Example 6 | subst. cylindrical | 2.5 | 2.4 | 0.95 |
| Example 7 | subst. cylindrical | 2.6 | 2.3 | 0.88 |
| *Example 8 | subst. cylindrical | 2.4 | 2.2 | 0.92 |
| Comp. Ex. 1 | subst. cylindrical | 2.4 | 2.1 | 0.87 |
| Comp. Ex. 2 | subst. cylindrical | 2.0 | 2.1 | 1.05 |
| Comp. Ex. 3 | subst. cylindrical | 3.4 | 2.5 | 0.74 |
| *Reference Example | | | | |

Table 6

| | | expanded bead | | | | | | | | | forming condition | | foamed article | | |
|---|---|---|---|---|---|---|---|---|---|---|---|---|---|---|---|
| | ceramic content (wt%) | maleic anhydride content (wt%) | apparent density (g/cm$^3$) | standard deviation (Sw) of weight (mg) | standard deviation (Sd) of apparent density (g/cm$^3$) | high temp. peak calorie $\Delta$Hh (J/g) | entire melt calorie $\Delta$Ht(J/g) | $\Delta$Hth-$\Delta$Ht x 100 (%) | average cell number (/mm$^2$) | average cell diam-eter (μm) | gauge pressure of expand-ed bead (MPa) | steam pressure (gauge pres.) (MPa) | apparent density (g/cm$^3$) | standard deviation of appar-ent densi-ty (g/cm$^3$) | electrical property |
| *Ex. 1 | 50 | 0.31 | 0.425 | 0.13 | 0.080 | 6.8 | 35.5 | 19.2 | 220 | 110 | 0.2 | 0.24 | 0.270 | 0.010 | B |
| *Ex. 2 | 50 | 0.31 | 0.615 | 0.11 | 0.152 | 7.5 | 36.7 | 20.4 | 210 | 70 | 0.25 | 0.30 | 0.397 | 0.011 | C |
| *Ex. 3 | 50 | 0.31 | 0.212 | 0.13 | 0.022 | 6.2 | 36.5 | 17.0 | 240 | 70 | 0.2 | 0.24 | 0.135 | 0.009 | A |
| Ex. 4 | 60 | 0.31 | 0.199 | 0.09 | 0.021 | 5.6 | 26.7 | 21.0 | 440 | 40 | 0.2 | 0.24 | 0.130 | 0.009 | A |
| Ex. 5 | 60 | 0.26 | 0.733 | 0.11 | 0.163 | 5.2 | 24.8 | 21.0 | 620 | 30 | 0.25 | 0.32 | 0.465 | 0.013 | C |
| *Ex. 6 | 50 | 0 | 0.312 | 0.14 | 0.048 | 6.7 | 37.2 | 18.0 | 70 | 180 | 0.17 | 0.24 | 0.197 | 0.018 | C |
| Ex. 7 | 50 | 0.19 | 0.309 | 0.11 | 0.055 | 8.4 | 35.1 | 23.9 | 360 | 20 | 0.16 | 0.24 | 0.200 | 0.018 | B |
| *Ex. 8 | 50 | 0.31 | 0.380 | 0.12 | 0.098 | 6.6 | 35.7 | 18.5 | 220 | 90 | 0.2 | 0.24 | 0.245 | 0.019 | B |
| Comp. Ex 1 | 50 | 0.31 | 0.391 | 0.12 | 0.087 | 0.6 | 34.8 | 1.7 | 120 | 80 | 0.2 | 0.24 | 0.250 | 0.032 | D |
| Comp. Ex. 2 | 50 | 0.31 | 0.698 | 0.11 | 0.144 | 14.1 | 39.2 | 36.0 | 420 | 50 | 0.25 | - | MOLDING IMPOSSIBLE | | |
| Comp. Ex. 2 | 50 | 0.31 | 0.210 | 0.14 | 0.033 | 0.4 | 37.2 | 1.1 | 240 | 100 | 0.22 | - | MOLDING IMPOSSIBLE | | |
| *Reference Example | | | | | | | | | | | | | | | |

The expanded beads obtained in each of Examples 1 - 8 and Comparative Examples 1 - 3 are held in a pressurizing tank to provide an internal pressure of the expanded bead shown in Table 6, then filled in a forming mold and heated by introducing steam of a pressure shown in Table 6 into the mold thereby causing fusion of the expanded beads, and then cooled to achieve an in-mold molding of a foamed article of expanded beads of a semispherical dome shape. The obtained foamed article of the expanded beads is conditioned for 24 hours at 60°C and under an atmospheric pressure, and further conditioned for 48 hours at 23°C and under an atmospheric pressure to obtain a dielectric lens material of a semispherical dome shape with an internal diameterof 175 mm and an external diameter of 200mm. An apparent density of the obtained dielectric lens member (foamed article), a standard deviation of the apparent density and an electrical property of the foamed article are also shown in Table 6. An open cell content is lower than 20 % in the dielectric lens materials obtained in Examples 1 - 8, and is higher than 40 % in the dielectric lens material obtained in Comparative Example 1.

Examples 9 - 16 and Comparative Examples 4 - 6

The expanded beads obtained in Examples 1 - 8 and Comparative Examples 1 - 3 are classified by a gravity separator to obtain expanded beads shown in Table 7. Examples 9 - 16 and Comparative Examples 4 - 6 employed the expanded beads obtained by classifying the expanded beads respectively of Examples 1 - 8 and Comparative Examples 1 - 3, and the values of a calorie ($\Delta H_h$) of the high temperature peak, a calorie $\Delta H_t$ of the peaks of the entire endothermic curve, a proportion ($\Delta H_h / \Delta H_t \times 100$) of the calorie of the high temperature peak to the calorie of the peaks of the entire endothermic curve, an average cell number, an average cell diameter, a ceramic content, a maleic anhydride content, and a shape of the expanded bead, after the classification are same as those before the classification, shown in Tables 5 and 6.
An apparent density of the expanded bead, a standard deviation (Sd) of the apparent density and a standard deviation (Sw) of the weight after the classification are shown in Table 7.
The expanded beads are held in a pressurizing tank to provide an internal pressure of the expanded bead shown in Table 7, then filled in a forming mold and heated by introducing steam of a pressure shown in Table 7 into the mold thereby causing fusion of the expanded beads, and then cooled to achieve an in-mold molding of a foamed article of expanded beads of a semispherical dome shape. The obtained foamed article of the expanded beads is conditioned for 24 hours at 60°C and under an atmospheric pressure, and further conditioned for 48 hours at 23°C and under an atmospheric pressure to obtain a dielectric lens member of a semispherical dome shape with an internal diameter of 175 mm and an external diameter of 200mm. An apparent density of the obtained dielectric lens member (foamed article), a standard deviation of the apparent density and an electrical property of the foamed article are also shown in Table 7. An open cell content is lower than 20 % in the dielectric lens members obtained in Examples 9 - 16, and is higher than 40 % in the dielectric lens member obtained in Comparative Example 4.

Table 7

| | expanded bead | | | forming condition | | foamed article | | |
|---|---|---|---|---|---|---|---|---|
| | apparent density after classification (g/cm$^3$) | standard deviation of weight after classification (Sw) (mg) | standard deviation of apparent density after classification (Sd) (g/cm$^3$) | gauge pressure of expanded bead (MPa) | steam pressure (gauge pres.) (MPa) | apparent density (g/cm$^3$) | standard deviation of apparent density (g/cm$^3$) | electrical property |
| *Example 9 | 0.417 | 0.12 | 0.019 | 0.2 | 0.24 | 0.270 | 0.006 | S |
| *Example 10 | 0.627 | 0.11 | 0.027 | 0.25 | 0.30 | 0.399 | 0.007 | S |
| *Example 11 | 0.217 | 0.12 | 0.015 | 0.2 | 0.24 | 0.137 | 0.004 | S |
| Example 12 | 0.206 | 0.09 | 0.018 | 0.2 | 0.24 | 0.131 | 0.004 | S |
| Example 13 | 0.747 | 0.11 | 0.074 | 0.25 | 0.32 | 0.472 | 0.007 | A |
| *Example 14 | 0.306 | 0.14 | 0.041 | 0.17 | 0.24 | 0.195 | 0.018 | B |
| Example 15 | 0.317 | 0.11 | 0.048 | 0.16 | 0.24 | 0.203 | 0.017 | A |
| *Example 16 | 0.385 | 0.12 | 0.027 | 0.2 | 0.24 | 0.248 | 0.018 | A |
| Comp. Ex. 4 | 0.394 | 0.12 | 0.030 | 0.2 | 0.24 | 0.250 | 0.030 | D |
| Comp. Ex. 5 | 0.725 | 0.10 | 0.017 | 0.25 | - | MOLDING IMPOSSIBLE | | |
| Comp. Ex. 6 | 0.231 | 0.14 | 0.022 | 0.22 | - | MOLDING IMPOSSIBLE | | |
| *Reference Example | | | | | | | | |

In the evaluation of electrical property of the foamed article in Tables 6 and 7, is measured as follows. From the foamed article, fifteen (15) rectangular parallelepiped specimens each having a length of 16 mm, a width of 10 mm and a thickness of 8 mm are cut out at the positions <1> to <15> shown in Fig. 5(a). Each of the three positions <1>, <6> and <11>, is the top of the foamed article. The positions <2> to <5> are angularly equally spaced apart from each other and each spaced an angle of about 20 degrees (shown as $\theta$ in Fig. 5 (b)) from the plane including the annular edge of the foamed article. The positions <7> to <10> and the positions <12> to <15> are also arranged similarly to the positions <2> to <5>. The axis in the thickness direction of each of the cut samples is in parallel or nearly in parallel with the radial direction of the hemispherical foamed article. Each of the fifteen specimens is measured for a dielectric constant. From the results of the measurement, the standard deviation of the dielectric constant is calculated. And the evaluation criteria are followed.

The standard deviation is given by a square root of the variance:

S: standard deviation of dielectric constant being less than 0.02;
A: standard deviation of dielectric constant being 0.02 or larger but less than 0.03;
B: standard deviation of dielectric constant being 0.03 or larger but less than 0.04;
C: standard deviation of dielectric constant being 0.04 or larger but less than 0.05;
D: standard deviation of dielectric constant being 0.05 or larger.

The standard deviation of the apparent density of the foamed article shown in Tables 6 and 7 are obtained by cutting out 15 test pieces in the same manner as in the evaluation of electrical property of the foamed article, measuring the apparent density of each test piece and calculating the standard deviation on the measured values. The apparent density of the test piece is determined by measuring the weight to 0.01 mg, also measuring the dimensions of three sides to 0.01 mm with an electronic caliper to obtain a volume, and dividing the weight with the volume to unit conversion. The standard deviation is given by a square root of the variance.

While the invention has been described with reference to the exemplary embodiment, the technical scope of the invention is not restricted to the description of the exemplary embodiment. It is apparent to the skilled in the art that various changes or improvements can be made. It is apparent from the description of claims that the changed or improved configurations can also be included in the technical scope of the invention.

**Claims**

1. An expanded polypropylene bead for forming a dielectric material, the bead having:

an apparent density of from 0.03 to 1.7 g/cm$^3$,
an intrinsic endothermic peak specific to the polypropylene resin on a curve measured by differential scanning calorimetry (DSC), and an endothermic peak at a higher temperature side of the intrinsic endothermic peak, wherein the caloritic value ($\Delta H_h$) of the endothermic peak at the higher temperature side is from 10 to 30 % of the calorie value ($\Delta H_t$) of the whole endothermic peaks,
wherein the bead comprises:
a polypropylene resin, the polypropylene resin being a propylene homopolymer or a copolymer of propylene with one or more comonomers having a propylene monomer unit content of at least 70 mole %;
a ceramic which is contained in an amount of 10 to 80 wt% in the polypropylene resin; and
a carboxylic acid-modified polyolefin containing a carboxylic acid group-containing comonomer, the carboxylic acid group-containing comonomer selected from an acid anhydride or a carboxylic acid,
wherein:
the polypropylene copolymer is selected from propylene-ethylene random copolymers, propylene-ethylene block copolymers, propylene-butene random copolymers and propylene-ethylene-butene random terpolymers; and
the ceramic comprises titanium oxide as a major component having a fiber-like shape having an average maximum diameter of from 0.01 to 30 $\mu$m and an average maximum length of from 0.1 to 100 $\mu$m, or a granular shape having an average of a maximum length of from 0.01 to 100 $\mu$m.

2. The expanded polypropylene bead according to claim 1, wherein a cross-section of the expanded bead has an average cell number of from 20 to 1000/mm$^2$ of a cross-section thereof, and an average cell diameter of 5 to 200 $\mu$m.

3. The expanded polypropylene bead according to claim 1, wherein the average maximum length of the expanded bead is from 0.8 to 5.0 mm.

**4.** The expanded polypropylene bead according to claim 1, wherein the apparent density of the expanded bead has a standard deviation (Sd) of 0.1 g/cm$^3$ or less, and a weight of the expanded bead has a standard deviation (Sw) of 0.5 mg or less.

**5.** The expanded polypropylene bead according to claim 2, wherein the apparent density of an expanded bead has a standard deviation (Sd) of 0.1 g/cm$^3$ or less, and a weight with a standard deviation (Sw) of 0.5 mg or less.

**Patentansprüche**

**1.** Expandierte Polypropylenperle zum Bilden eines dielektrischen Materials, die aufweist:

eine scheinbare Dichte von 0,03 bis 1,7 g/cm$^3$,
einen intrinsischen endothermen Peak, der für das Polypropylenharz spezifisch ist, auf einer Kurve, die durch Differentialscanningkalorimetrie (DSC) gemessen ist, und einen endothermen Peak auf der Seite des intrinsischen endothermen Peaks höherer Temperatur, wobei der kalorische Wert ($\Delta H_h$) des endothermen Peaks auf der Seite höherer Temperatur 10 bis 30 % des kalorischen Werts ($\Delta H_t$) des gesamten endothermen Peaks beträgt, wobei die Perle umfasst:

ein Polypropylenharz, wobei das Polypropylenharz ein Propylen-Homopolymer oder ein Copolymer von Propylen mit einem oder mehreren Comonomer(en), das/die einen Comonomereinheitsgehalt von mindestens 70 mol-% aufweist, ist;
eine Keramik, die in einer Menge von 10 bis 80 Gew.% in dem Polypropylenharz enthalten ist; und
ein Carbonsäure-modifiziertes Polyolefin, das ein carbonsäuregruppenhaltiges Comonomer enthält, wobei das carbonsäuregruppenhaltige Comonomer aus einem Säureanhydrid oder einer Carbonsäure ausgewählt ist,

wobei:

das Polypropylen-Copolymer aus statistischen Propylen-Ethylen-Copolymeren, Propylen-Ethylen-Blockcopolymeren, statistischen Propylen-Buten-Copolymeren und statistischen Propylen-Ethylen-Buten-Terpolymeren ausgewählt ist; und
die Keramik Titanoxid, das eine faserartige Form mit einem durchschnittlichen maximalen Durchmesser von 0,01 bis 30 $\mu$m und einer durchschnittlichen maximalen Länge von 0,1 bis 100 $\mu$m oder eine körnige Form mit einer durchschnittlichen maximalen Länge von 0,01 bis 100 $\mu$m aufweist, als Hauptkomponente umfasst.

**2.** Expandierte Polypropylenperle gemäss Anspruch 1, wobei der Querschnitt der expandierten Perle eine durchschnittliche Zellenzahl von 20 bis 1.000/mm$^2$ des Querschnitts und einen durchschnittlichen Zellendurchmesser von 5 bis 200 $\mu$m aufweist.

**3.** Expandierte Polypropylenperle gemäss Anspruch 1, wobei die durchschnittliche maximale Länge der expandierten Perle 0,8 bis 5,0 mm beträgt.

**4.** Expandierte Polypropylenperle gemäss Anspruch 1, wobei die scheinbare Dichte der expandierten Perle eine Standardabweisung (Sd) von 0,1 g/cm$^3$ oder weniger aufweist und das Gewicht der expandierten Perle eine Standardabweichung (Sw) von 0,5 mg oder weniger aufweist.

**5.** Expandierte Polypropylenperle gemäss Anspruch 2, wobei die scheinbare Dichte der expandierten Perle eine Standardabweisung (Sd) von 0,1 g/cm$^3$ oder weniger aufweist und das Gewicht der expandierten Perle eine Standardabweichung (Sw) von 0,5 mg oder weniger aufweist.

**Revendications**

**1.** Perle de polypropylène expansé pour former un matériau diélectrique, la perle ayant :

une masse volumique apparente de 0,03 à 1,7 g/cm$^3$,

un pic endothermique intrinsèque spécifique de la résine de polypropylène sur une courbe mesurée par calorimétrie à balayage différentiel (DSC), et un pic endothermique du côté des températures plus élevées du pic endothermique intrinsèque, la valeur calorique ($\Delta H_h$) du pic endothermique du côté des températures plus élevées étant de 10 à 30 % de la valeur calorique ($\Delta H_t$) de la totalité des pics endothermiques, laquelle perle comprend :

une résine de polypropylène, la résine de polypropylène étant un homopolymère de propylène ou un copolymère de propylène avec un ou plusieurs comonomères ayant une teneur en motif monomère de propylène d'au moins 70 % en moles ;
une céramique qui est contenue en une quantité de 10 à 80 % en poids dans la résine de polypropylène ; et
une polyoléfine modifiée par un acide carboxylique contenant un comonomère contenant un groupe acide carboxylique, le comonomère contenant un groupe acide carboxylique étant choisi parmi un anhydride d'acide et un acide carboxylique,
dans laquelle
le copolymère de polypropylène est choisi parmi les copolymères statistiques de propylène-éthylène, les copolymères séquencés de propylène-éthylène, les copolymères statistiques de propylène-butène et les terpolymères statistiques de propylène-éthylène-butène ; et
la céramique comprend de l'oxyde de titane à titre de composant majeur, ayant une forme analogue à une fibre ayant un diamètre maximal moyen de 0,01 à 30 $\mu$m et une longueur maximale moyenne de 0,1 à 100 $\mu$m, ou une forme granulaire ayant une longueur maximale moyenne de 0,01 à 100 $\mu$m.

2. Perle de polypropylène expansé selon la revendication 1, dans laquelle la coupe transversale de la perle expansée a un nombre d'alvéoles moyen de 20 à 1000 par mm$^2$ d'une coupe transversale de celle-ci, et un diamètre d'alvéole moyen de 5 à 200 $\mu$m.

3. Perle de polypropylène expansé selon la revendication 1, dans laquelle la longueur maximale moyenne de la perle expansée est de 0,8 à 5,0 mm.

4. Perle de polypropylène expansé selon la revendication 1, dans laquelle la masse volumique apparente de la perle expansée a un écart type (Sd) de 0,1 g/cm$^3$ ou moins, et le poids de la perle expansée a un écart type (Sw) de 0,5 mg ou moins.

5. Perle de polypropylène expansé selon la revendication 2, dans laquelle la masse volumique apparente de la perle expansée a un écart type (Sd) de 0,1 g/cm$^3$ ou moins, et le poids de la perle expansée a un écart type (Sw) de 0,5 mg ou moins.

# FIG. 1

EP 1 794 221 B1

## FIG. 2

EP 1 794 221 B1

# FIG. 3

FIG. 4(a)

FIG. 4(b)

## FIG. 5(a)

$((12))$
$(2)$
$((7))$

$((13))$        $((11))$        $((15))$
$(3)$        $(1)$        $(5)$
$((8))$        $((6))$        $((10))$

$((14))$
$(4)$
$((9))$

## FIG. 5(b)

$((11))$
$(1)$
$((6))$

$((12))$        $((14))$
$(2)$        $(4)$
$((7))$        $((9))$

$\theta$        $\theta$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040029985 A
- EP 0963827 A2
- EP 16030319 A
- JP H0688786 B
- JP H05221795 B
- JP H1095617 B